# EUROPÄISCHE PATENTSCHRIFT

(11) **EP 1 368 970 B1**
(45) Veröffentlichungstag und Bekanntmachung des Hinweises auf die Patenterteilung: **10.08.2005**
(21) Anmeldenummer: 01916900.2
(22) Anmeldetag: 05.03.2001
(51) Int. Cl.: H04N 7/18, H04N 5/262, B60R 1/00, G06T 5/00

(54) **VERFAHREN UND VORRICHTUNG ZUM ENTZERREN EINES BILDES, INSBESONDERE FÜR INSASSENSCHUTZSYSTEME**
METHOD AND DEVICE FOR CORRECTING AN IMAGE, PARTICULARLY FOR OCCUPANT PROTECTION SYSTEMS
PROCEDE ET DISPOSITIF POUR CORRIGER UNE IMAGE, EN PARTICULIER POUR SYSTEMES DE PROTECTION DE PASSAGERS

(43) Veröffentlichungstag der Anmeldung: 10.12.2003
(73) Patentinhaber: SIEMENS AKTIENGESELLSCHAFT, 80333 München (DE)
(72) Erfinder: KOEHLER, Thorsten, 93180 Deuerling (DE); WAGNER, Ulrich, 93055 Regensburg (DE)
(86) Internationale Anmeldenummer: PCT/DE2001/000825
(87) Internationale Veröffentlichungsnummer: WO 2002/078346

(56) Entgegenhaltungen:
- EP-A- 0 450 718
- WO-A-99/12349
- US-A- 5 384 588
- US-A- 5 815 199
- PATENT ABSTRACTS OF JAPAN vol. 1999, no. 01, 29. Januar 1999 (1999-01-29) -& JP 10 271490 A (YAZAKI CORP), 9. Oktober 1998 (1998-10-09)

## Beschreibung

Die Erfindung betrifft ein Verfahren und eine Vorrichtung zum Entzerren eines Bildes, insbesondere für Insassenschutzsysteme, nach dem Oberbegriff des Anspruchs 1.

Ein gattungsbildendes System zur Entzerrung von Bildern ist beispielsweise aus der US 5,815,199 bekannt.

Aus Microsoft Research Technical Report MSR-TR-98-71 "A Flexible New Technique for Camera Calibration" ist ein Verfahren zur Kompensation von Bildverzerrungen bekannt, bei dem eine mathematische Rechenvorschrift verwendet wird, mit der ein von einer Kamera aufgenommenes Sourcebild auf ein Targetbild abbildet. Die Rechenvorschrift berechnet aus dem in einen Arbeitsspeicher geladenen Sourcebild das entzerrte Targetbild.

Nachteilig bei einem solchen Verfahren ist der hohe Speicherplatzbedarf zum Abspeichern des Sourcebildes und die hohe benötigte Rechenleistung.

Aufgabe der Erfindung ist es, die durch ein Kamerasystem verursachten Bildverzerrungen eines Bildes schnell und kostengünstig zu kompensieren.

Die Aufgabe wird gelöst durch die Merkmale der unabhängigen Ansprüche.

Dabei wird ein Verfahren zur Kompensation von Bildverzerrungen vorgeschlagen, das insbesondere in Bilderfassungssystemen für Insassenschutzsysteme eingesetzt wird. Ein durch die Optik eines Kamerasystems verzerrtes Bild ergibt im Bildsensor des Kamerasystems ein Sourcebild (Quellbild), das abhängig von der Qualität der Optik, der Brennweite des Kamerasystems und anderer optischer Parameter auf unterschiedliche Art und Weise verzerrt ist. Das Sourcebild ist aufgeteilt in einzelne Sourcepixel, die jeweils an einer vorgegebenen Position in dem Sourcebild angeordnet ist und deren von dem Bildsensor aufgenommenen Grauwerte jeweils unter einer vorgegebenen Sourcepixeladresse im Bildsensor gespeichert sind.

Über eine vorgegebene Abbildungsvorschrift wird das Sourcebild in ein Targetbild abgebildet, wodurch ein entzerrtes Targetbild entsteht. Das Targetbild besteht aus Targetpixel, deren Grauwerte jeweils unter einer Targetpixeladresse in einem Targetspeicher gespeichert werden. Dabei wird ein Sourcepixel in keines, ein oder -vorliegend erfindungsgemäß- auf mehrere Targetpixel abgebildet. Dabei wird der Grauwert der Sourcepixeladresse unter der Targetpixeladresse abgespeichert.

Die Abbildungsvorschrift zum Entzerren eines Sourcebildes in ein Targetbild wird vorzugsweise in einem Speicher eines Mikrocontrollers tabellarisch hinterlegt. Dadurch ist vorteilhaft eine schnelle Abarbeitung der Abbildungsvorschrift möglich. Weiterhin ist es nicht nötig, das Sourcebild zwischenzuspeichern, wodurch erheblicher Speicherplatz eingespart wird.

In einer Weiterbildung wird das Sourcepixel direkt, schon während des Auslesens des Sourcebildes aus dem Bildsensor ohne Zwischenspeichern in mindestens ein Targetpixel abgebildet. Dadurch wird vorteilhaft der benötigte Speicherplatz reduziert und gleichzeitig die Entzerrung des Sourcebilds ohne Verzögerung durchgeführt, was insbesondere für Insassenschutzsysteme erforderlich ist.

Durch die Abbildung des Sourcebildes in das Targetbild nach der vorgegebenen Abbildungsvorschrift entsteht ein Targetbild, das weniger Pixel aufweist als das Sourcebild. Somit gibt es einige Sourcepixel, die nicht in das Targetpixel abgebildet werden. Weiterhin nimmt der Bildsensor im Allgemeinen mehr Informationen auf als tatsächlich benötigt wird. Diese Informationen werden durch die Abbildungsvorschrift ausgefiltert. Somit wird vorteilhaft eine Filterung und eine Datenreduktion durchgeführt. In dem als Auswerteeinheit dienenden Mikrokontroller wird nur noch das durch die Abbildungsvorschrift erzeugte Targetbild abgespeichert. Dadurch wird wiederum Speicherplatz in der Auswerteeinheit gespart.

Weiterhin enthält eine Tabelle, im Folgenden auch Rektifiziertabelle genannt, im Mikrokontroller bzw. in der Auswerteeinheit die Abbildungsvorschrift zur Durchführung des Verfahrens der Entzerrung. Diese Tabelle enthält die Adressen aller Sourcepixel, die auf die Targetpixel abgebildet werden sollen, im Folgenden auch als "ausgewählte Sourcepixel" mit einer "ausgewählten Sourcepixeladresse" bezeichnet. Der Mikrocontroller in der Auswerteeinheit steuert sequentiell alle Sourcepixeladressen der Sourcepixel im Bildspeicher an. Die Sourcepixeladressen werden über einen Pointer ausgewählt, der über einen Zähler inkrementiert wird.

In der Tabelle ist jeder "ausgewählten Sourcepixeladresse" mindestens eine Targetpixeladresse eines Targetpixels zugeordnet. Die aus der Tabelle ausgelesenen Targetadressen werden mit dem Grauwert der jeweiligen ausgewählten Sourcepixeladresse gefüllt. Durch das Benützen einer Tabelle für die Abbildungsvorschrift wird der Rechenaufwand für die Auswerteeinheit reduziert. Weiterhin wird der Speicherbedarf reduziert, da nur noch ein Targetbild mit reduzierter Pixelanzahl in der Auswerteeinheit gespeichert wird. Weiterhin steht das entzerrte Targetbild praktisch direkt nach dem Auslesen des Sourcebildes aus dem Bildsensor zur Verfügung.

Vor allem in den Randbereichen des Sourcebildes sind die Bildinformationen des Sourcebildes enger zusammen gerückt als im Zentrum des Bildes. Daher werden vor allem im Randbereich der Grauwert mindestens eines ausgewählten Sourcepixels auf mehrere Targetpixel verteilt bzw. im Targetspeicher gespeichert. Um ein störungsloses Hochzählen des Pointers zum Auslesen der Rektifiziertabelle, die pro ausgewähltes Sourcepixeladresse nur eine Targetpixeladresse enthält, ohne Unterbrechung zu ermöglichen, wird eine weitere Tabelle benutzt, die Informationen zur Mehrfachzuweisung enthält, insbesondere alle zu einer Sourcepixeladresse zugeordneten Targepixeladressen. Die weitere Tabelle wird im Folgenden auch als Referenztabelle bezeichnet. Vorzugsweise ist diese Referenztabelle direkt unter der Rektifiziertabelle im Speicher angeordnet.

In jedem Zyklus (Auslesezyklus) des Auslesens eines Sourcepixels durch den inkrementierenden Zähler sind Zyklen, im Folgenden Referenzzyklen genannt, vorhanden, bei dem kein ausgewähltes bzw. ein nicht-ausgewähltes Sourcepixel ausgelesen wird. Bei einem solchen Referenzzyklus wird nun auf die Referenztabelle zugegriffen, die die weiteren, nicht in der Rektifiziertabelle enthaltenen Targetpixeladressen für Mehrfachzuweisungen enthält. In mehreren nacheinanderfolgenden, oft auch von Auslesezyklen unterbrochenen Referenzzyklen wird entsprechend der Grauwert des ausgewählten Sourcepixels, mehreren Targetpixeln zugeordnet und im Targetspeicher abgespeichert. Da dies in den "Pausen" bzw. den "Referenzzyklen" geschieht, und die Anzahl der Targetpixel trotz der Mehrfachzuweisungen geringer ist als die Anzahl der Sourcepixel, ist direkt nach dem Auslesen des gesamten Sourcebildes aus dem Bildsensor über den inkrementierenden Zähler die Bildentzerrung abgeschlossen. Vorteilhaft wird somit das Entzerren des Sourcebildes in Echtzeit durchgeführt. Insbesondere bei Einsatz von zwei Bildsensoren zum Erzeugen eines Stereo-Bildes macht sich die Zeit- und Speicherersparnis besonders bemerkbar.

Durch die Verwendung von Tabellen anstatt einer Rechenvorschrift wird eine Echtzeitverarbeitung ermöglicht, wobei auch auf eine zwischenspeicherung des Sourcebildes verzichtet werden kann. Dadurch wird teurer Arbeitsspeicher eingespart, da gerade die Sourcebilder aufgrund ihrer Größe einen besonders hohen Speicherbedarf haben.

Das Verfahren wird vorzugsweise in einem FPGA oder ASIC realisiert. In einer weiteren Ausführungsform ist eine Implementierung in einem Mikroprozessor auch vorstellbar.

Für die folgende Figurenbeschreibung wird eine Begriffszuordnung vorgenommen:

Das Sourcebild stellt das Rohbild dar, das direkt von der Kamera geliefert wird. Dieses Bild ist bedingt durch die Optik verzerrt.

Das Sourcepixel stellt einen Bildpunkt im Sourcebild dar.

Die Sourcepixeladresse stellt eine Adresse eines bestimmten Bildpunktes im Sourcebild dar. Die Bildpunkte werden dabei linear durchnummeriert. Eine Umrechnung zwischen Bildkoordinaten und Sourcepixeladresse ist problemlos möglich. Der Wertebereich des Sourcepixeladressraums beträgt null bis (Anzahl der Bildpunkte im Sourcebild) minus eins.

Das Targetbild ist das Bild nach der Rektifizierung bzw. der Entzerrung. Es handelt sich um das entzerrte Bild, wobei das Pixelformat bzw. der Pixeladressraum kleiner ist als das Format des Sourcebildes bzw. des Sourcebildadressraums.

Das Targetpixel stellt einen Bildpunkt im Targetbild dar.

Die Targetpixeladresse ist die Adresse eines bestimmten Bildpunktes im Targetbild. Die Bildpunkte werden dabei linear durchnummeriert. Eine Umrechnung zwischen Bildkoordinaten und Targetpixeladresse ist problemlos möglich. Der Wertebereich des Targetpixeladressraums geht von Null bis (Anzahl der Bildpunkte im Targetbild) -1.

Die Rektifizierungstabelle ist die Tabelle, in der Verweise von der Sourcepixeladresse auf die entsprechende Targetpixeladresse gemacht werden. Die Anzahl der Einträge ist gleich der Zahl der Targetadressen. Bei Mehrfachzuweisungen ist die Anzahl der Targetadressen etwas größer als die Anzahl der Sourcepixeladressen. Die Rektifizierung erfolgt durch Abarbeiten dieser Tabelle.

Die Referenztabelle ist eine Tabelle, in der die Targetpixeladressen gespeichert sind, die durch Mehrfachzuweisung einer Sourcepixeladresse auf mehrere Targetpixeladressen hervorgerufen werden. Dabei enthält die Referenztabelle u. a. eine Referenzadresse und eine Targetadresse als Targetpixeladresse.

Vorteilhafte Weiterbildungen und Ausgestaltungen der Erfindung sind in den abhängigen Patentansprüchen angegeben.

Die Erfindung wird anhand der Zeichnung erläutert; es zeigen:
- Figur 1: den Innenraum eines Fahrzeugs mit einem optischen Bilderfassungssystem;
- Figur 2a: ein von einer Optik verzerrtes Sourcebild;
- Figur 2b: das über eine Abbildungsvorschrift entzerrte Sourcebild aus der Figur 2a;
- Figur 3: eine Abbildungsvorschrift, die ein Sourcebild in ein entzerrtes Targetbild überführt;
- Figur 4: der Pixeladressraum eines Bildes mit den Koordinaten der matrixförmig angeordneten Pixeladressen;
- Figur 5a: eine Abbildungstabelle (Rektifiziertabelle) zur Zuordnung von Sourcepixeladressen zu Targetpixeladressen;
- Figur 5b: eine weitere Tabelle (Referenztabelle) zur Zuordnung einer Sourcepixeladresse zu mehreren Targetpixeladressen;
- Figur 6: ein funtkionelles Blockschaltbild zum Durchführen des Verfahrens zum Entzerren eines vom Bildsensor aufgenommenen Sourcebildes;
- Figur 7a: ein Flussdiagramm eines Verfahrens zum Entzerren eines Sourcebildes; und
- Figur 7b: ein weiteres Flussdiagramm zum Entzerren eines Sourcebildes.

In den folgenden Figuren enthalten Figurenelemente mit den gleichen funktionellen Merkmalen die gleichen Bezugszeichen.

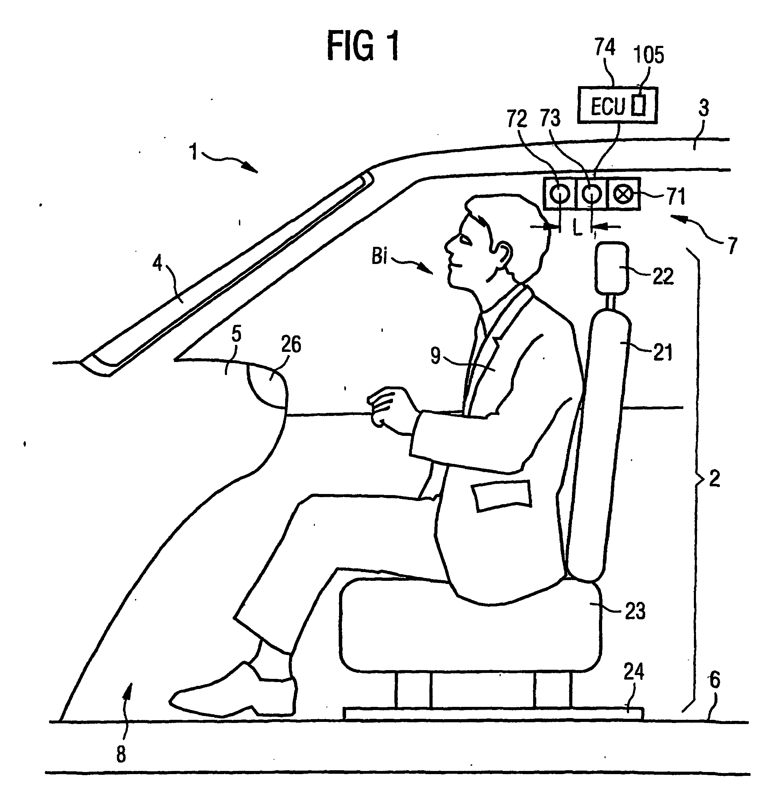

In Figur 1 ist ein Fahrzeug 1 schematisch dargestellt, in dem sich ein Fahrzeugsitz 2 mit einer Sitzfläche 23, einer Sitzlehne 21 und einer darauf befindlichen Kopfstütze 22 befindet. Am Himmel des Fahrzeugdachs 3, vorzugsweise zwischen den beiden vorderen Fahrzeugsitzen, ist ein optisches Kamerasystem 7, 71, 72, 73, 74 angeordnet, mit dem ein vorgegebener Bildbereich Bi des Fahrzeuginnenraums erfasst werden kann. Vorzugsweise zwei Bildsensoren 72, 73 erfassen über eine Kameraoptik den Bildbereich mit dem Fahrzeugsitz 2 mit einem fakultativ darauf befindlichen Objekt 9. In Figur 1 ist das Objekt 9 als Fahrzeuginsasse schematisch dargestellt.

In weiteren Ausführungsformen können die Objekte 9 als Kindersitz, Fahrzeuginsassen, Gegenstände o.ä. ausgebildet sein oder der Fahrzeugsitz 2 kann unbelegt sein.

Im vorderen Teil des Fahrzeugs 1 unter der Windschutzscheibe 4 ist ein Armaturenbrett 5 angeordnet, unter dem sich ein Fußraum 8 für die Füße und Beine des Insassen 9 befindet und in dem sich ein Airbag 26 befindet. Der Fußraum 8 wird nach unten von dem Fahrzeugboden 6 begrenzt, auf dem Sitzpositionsschienen 24 angeordnet sind. Der Fahrzeugsitz 2 ist im Bereich des Unterteils der Sitzfläche 23 über Stützmittel mit der Sitzpositionsschiene 24 verbunden. Somit ist der Fahrzeugsitz 2 in X-Richtung, d. h. Fahrzeugrichtung, verschiebbar angeordnet.

Das Kamerasystem 7 enthält vorzugsweise zwei Bildsensoren 72, 73, eine, vorzugsweise mit mehreren Leuchtdioden bestückte, Lichtquelle 71 und eine Auswerteeinheit 74. Die optischen Achsen der beiden Bildsensoren 72, 73 weisen einen vorgegebenen Abstand L auf. Dadurch ist es möglich, aus den aufgenommenen Bildern der beiden Bildsensoren 72, 73 über Stereo-Bildverarbeitungsverfahren Abstandsinformationen der Objekte im vorgegebenen Bildbereich Bi zu erfassen. Die Kamera 7 enthält vorzugsweise die beiden Bildsensoren 72, 73 und die Lichtquelle 71 in einem kompakten Gehäuse. Die Auswerteeinheit 74 ist vorzugsweise über eine Datenleitung entfernt von dem kompakten Gehäuse angeordnet, um das von Designern von Fahrzeuginnenräumen als störend empfundene Kamerasystem 7 so klein wie möglich zu halten. Es ist aber durchaus möglich, auch die Auswerteeinheit 74 (ECU) in das Kameragehäuse der Kamera 7 zu integrieren. Die Auswerteeinheit 74 weist einen Targetspeicher 105 auf, in dem das entzerrte Targetbild speicherbar ist.

In einer weiteren Ausführungsform ist nur ein Bildsensor 71 oder 73 vorgesehen, wodurch sich die Kosten reduzieren. Die benötigten Abstandsinformationen werden hier vorzugsweise über Lichtlaufzeitmessungen oder andere Bildverarbeitungsverfahren ermittelt.

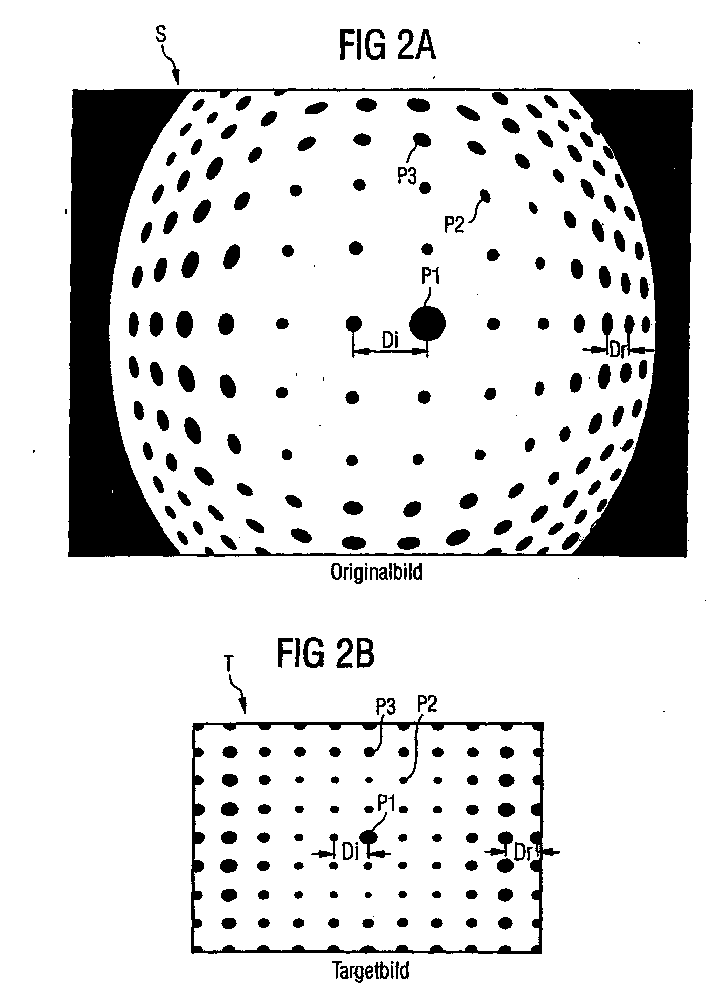

In Figur 2a ist ein von der Optik verzerrtes Sourcebild S (Originalbild) mit Punkten P1, P2, P3 unterschiedlicher Größe dargestellt. Das Sourcebild S ist das Bild, das einer der Bildsensoren 72, 73 aus Figur 1 über eine verzerrende Kameraoptik aufgenommen hat. Die ursprünglich matrixförmig angeordneten Bildpunkte P1, P2, P3 wurden durch die Weitwinkelcharakteristik der Kameraoptik (Fischaugeneffekt) verzerrt. In Figur 2b ist ein Targetbild T dargestellt, dass nach der Entzerrung des Sourcebildes S entsteht. Man sieht im Targetbild T die in einer rechtwinkligen Matrix angeordneten Bildpunkte P1, P2, P3 des ursprünglichen verzerrten Sourcebildes S.

Aus dem Vergleich des Sourcebilds S aus Figur 2a mit dem Targetbild aus Figur 2b ist deutlich sichtbar, dass im Sourcebild S redundante Bildinformationen am Rande des Aufnahmebereichs des Bildsensors 72 enthalten sind, beispielsweise die schwarzen Flächen am linken und am rechten Bildrand. Diese redundanten Informationen werden durch das Entzerrverfahren und die Überführung in das Targetbild T entfernt. Weiterhin ist ersichtlich, dass der Abstand Dr zwischen zwei benachbarten Bildpunkten am Rande des Sourcebildes S scheinbar geringer ist als der Abstand Di zwischen zwei benachbarten Bildpunkten im Zentrum des Sourcebildes S. Auch diese Verzerrung wird durch das Entzerrverfahren ausgeglichen, wie im Targetbild T durch die gleichmäßigen Abstände Di, Dr zwischen den jeweils benachbarten Bildpunkten ersichtlich ist.

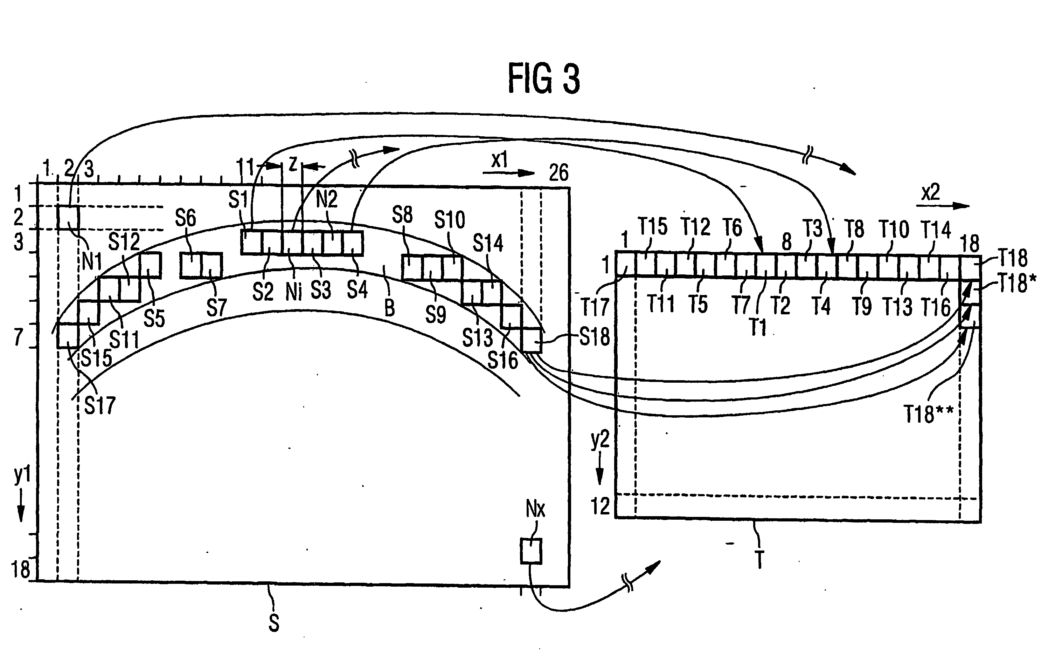

In Figur 3 ist die Abbildungsvorschrift zum Überführen eines Sourcebildes S in ein entzerrtes Targetbild T schematisch dargestellt. Das von einem Bildsensor 72, 73 (Figur 1) über eine Kameraoptik verzerrte Sourcebild S ist matrixförmig in Sourcepixel N1, S1 bis S18, NI, NX unterteilt. Das Sourcebild weist in X1-Richtung (waagrecht, horizontal) sechsundzwanzig (26) Spalten und in Y1-Richtung (senkrecht, vertikal) achtzehn (18) Zeilen auf. Dadurch wird ein Sourcepixeladressraum (X1,Y1) aufgespannt. Aus den Sourcepixeln des Sourcebildes S werden einige vorgegebene Sourcepixel S1 bis S18 ausgewählt, die jeweils unter einer vorgegebenen Sourcepixeladresse (Xi, Yi) angeordnet sind. Hinter jeder Sourcepixeladresse ist ein entsprechender von dem Bildsensor aufgenommener Grauwert hinterlegt, dessen Wert abhängt von der Helligkeit des entsprechenden Sourcepixels.

Das Targetbild T weist einen Targetpixeladressraum (X2, Y2) auf, der aus 18 Spalten (X2) und 12 Zeilen (Y2) besteht.

Mit Hilfe eines weiter unten erläuterten Entzerrverfahrens wird so beispielsweise das Sourcepixel S1 mit der Adresse X1 = 11, Y1 = 3 über eine Abbildungsvorschrift in den Adressraum des Targetbildes T unter die Targetpixeladresse X2 = 8, Y2 = 1 abgebildet. Der Grauwert des Sourcepixels S1 wird unter der Targetpixeladresse des Targetpixels T1 abgelegt. Die Zuordnung des ausgewählten Sourcepixels S1 zu dem Targetpixel T1 ist eindeutig.

Ein weiteres Sourcepixel N1, das sich unter der Adresse X1 = 2, Y1 = 2 (2;2) am Bildrand befindet, wird von der Abbildungsvorschrift nicht erfasst, d. h. das Sourcepixel N1 wird nicht in ein Targetpixel des Targetbild T abgebildet. Das Sourcpixel N1 befindet sich außerhalb des für die weitere Bildverarbeitung interessanten Bildbereichs Bi des Kamerasystems. Dies ist in Figur 2a am linken oberen Bildrand ersichtlich, wo sich das Sourcepixel N1 auf einer schwarze Fläche befindet. Der Bildsensor 72, 73 sieht an dieser Sourcepixeladresse (2;2) kein verwertbares Bild, da durch die Verzerrung der Kameraoptik die Bildinformationen in Richtung Bildzentrum zusammen gedrängt werden und der schwarze Rand des Sourcebildes S keine Bildinformation enthält.

Die Zeile 1 des Targetbilds T stellt die entzerrte Bildzeile der im Sourcebild S als bogenförmig gekrümmt ausgebildete Bildzeile B dar.

Im Sourcebild S gibt es ausgewählte Sourcepixel S1 bis S18 und nicht-ausgewählte Sourcepixel N1, Ni. Die ausgewählten Sourcepixel S1 bis S18 werden in dem Targetpixeladressraum des Targetbildes T abgebildet. Die nicht-ausgewählten Sourcepixel NI werden nicht in das Targetbild T abgebildet. Zwischen den Sourcepixeln S1 und S4 befinden sich im Sourcebild S vier Sourcepixel S2, Ni, S3, N2, wobei sich zwischen den entsprechenden Targetpixeln T1 und T4 nur zwei Targetpixel T2, T3 befinden. Somit wird das Targetbild T in horizontaler (X-) Richtung im Vergleich zum Sourcebild S um zwei Pixel gestaucht.

Am Rand des Sourcebildes S liegt unter der Adresse X1 = 25, Y1 = 7 das Sourcepixel S18 - anders dargestellt als Adresse (25;7). Da durch die Verzerrung im Sourcebild S an dessen Rand die betreffend dargestellten Punkte stark gestaucht sind, wie in Figur 2a anhand der unterschiedlichen Abstände Di und Dr ersichtlich ist, wird durch Abbilden des Sourcepixels S18 auf zwei untereinanderliegende Targetpixel T18, T18* das Bild durch die Abbildungsvorschrift entstaucht, entzerrt bzw. gedehnt. Dabei liegt das Targetpixel T18 unter der Adresse (18;1) und das Targetpixel T18* unter der Adresse (18,2).

Durch die Abbildungsvorschrift entsteht aus dem Sourcebild S mit einem Pixeladressraum (X1;Y1) ein Targetbild T mit einem kleineren Pixeladressraum (X2;Y2). Redundante Informationen werden aus dem Sourcebild S herausgefiltert, so dass durch die Reduktion der Datenmenge ein geringerer Speicherbedarf zur Speicherung des Targetbilds T benötigt wird. Das Sourcepixel Nx (25;17) ist beispielsweise ein nicht ausgewähltes Sourcepixel, das nicht in der Abbildungsvorschrift enthalten ist und somit nicht als "speicherfressender Ballast" im Targetspeicher 105 (s. Figur 1) des Targetbilds T abgelegt wird.

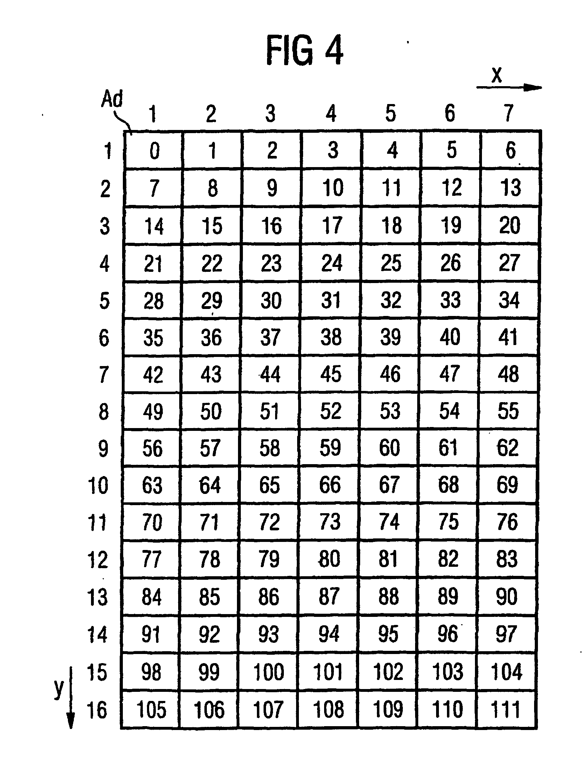

In Figur 4 ist zur Verdeutlichung der Verwaltung der Bildpixel des Sourcebildes S und des Targetbildes T und des Begriffs "Pixeladressraum" ein 7x16 Pixelbeispielbild dargestellt. Beginnend mit der Adresse Ad=0 links oben unter der XY-Koordinate (1;1) wird die Adresse Ad von links nach rechts bis zur Adresse Ad=6 unter der Koordinate (1;6) hochgezählt. Die nächste Adresse Ad=7 befindet sich nach einem Sprung zum linken Rand der nächsten Zeile 2 unter der Koordinate (2;1). Entsprechend wird die Adresse Ad bis zur höchsten Adresse Ad=111 unter der Koordinate (7;16) zeilenweise hoch gezählt. Diese Adresszuordnung wird zum Auslesen der Grauwerte eines Bildsensors 72, 73 (Figur 1) benutzt. Die Adresse Ad wird über einen Zähler fortlaufend erhöht, wobei der Grauwert unter der jeweiligen aktuellen Adresse Ad aus dem Bildsensor 72, 73 ausgelesen wird. Somit wird der Inhalt des Bildsensors 72, 73 zeilenweise ausgelesen. Der die Adresse Ad beinhaltende Zählerstand wird im Folgenden auch Counter_Source genannt.

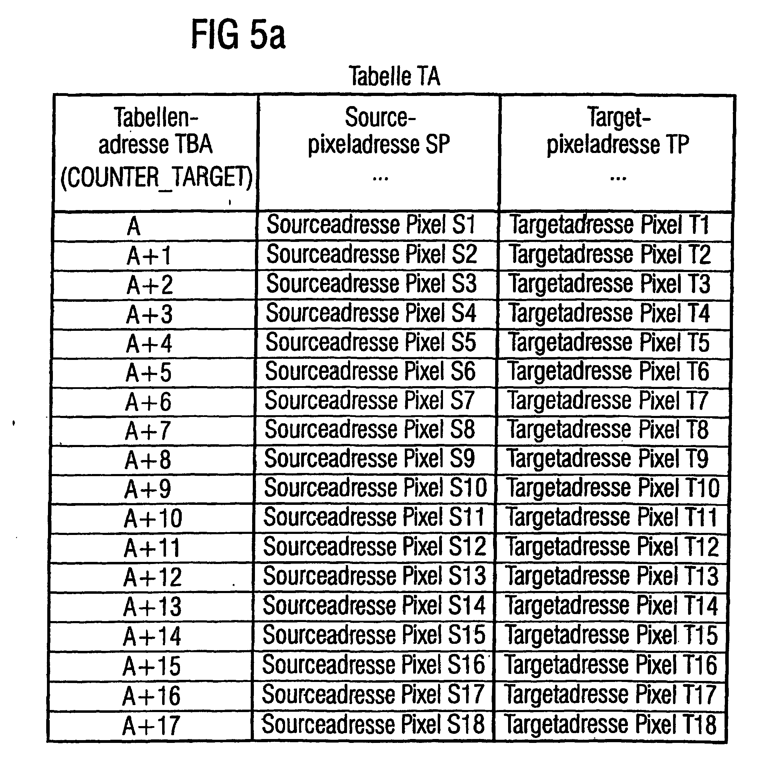

Mit Hilfe der Tabelle TA aus Figur 5a wird die Abbildungsvorschrift zum Entzerren des Sourcebildes S durchgeführt. Die Tabelle TA, im Folgenden auch Rektifiziertabelle TA genannt, weist drei Spalten auf, die jeweils die Tabellenadresse TBA, die Sourcepixeladresse SP und die Targetpixeladresse TP enthalten. Die Tabelle TA ist nach aufsteigender Sourcepixeladresse sortiert. Es kommt keine Sourcepixeladresse doppelt vor.

Die Tabellenadresse TBA enthält Pointeradressen A, A+1, ..., A+17 eines Pointers, der auf die jeweilige Sourcepixeladresse SP der Sourcepixel S1 bis S18 in der zweiten Spalte und auf die jeweilige Targetpixeladresse TP der Targetpixel T1 bis T18 der dritten Spalte weist. Ein zyklisch hoch zählender Zähler mit dem Zählerinhalt "Counter_Target" zählt die Tabellenadresse TBA hoch, was in den folgenden Figuren beschrieben wird. Die Rektifiziertabelle TA gibt in Abhängigkeit von der aktuellen Pointeradresse die entsprechende Sourcepixeladresse SP und die ihr zugeordnete Targetpixeladresse TP aus. Die Rektifiziertabelle TA weist somit jeder "ausgewählten" bzw. "vorgegebenen" Sourcepixeladresse SP genau eine Targetpixeladresse TP zu.

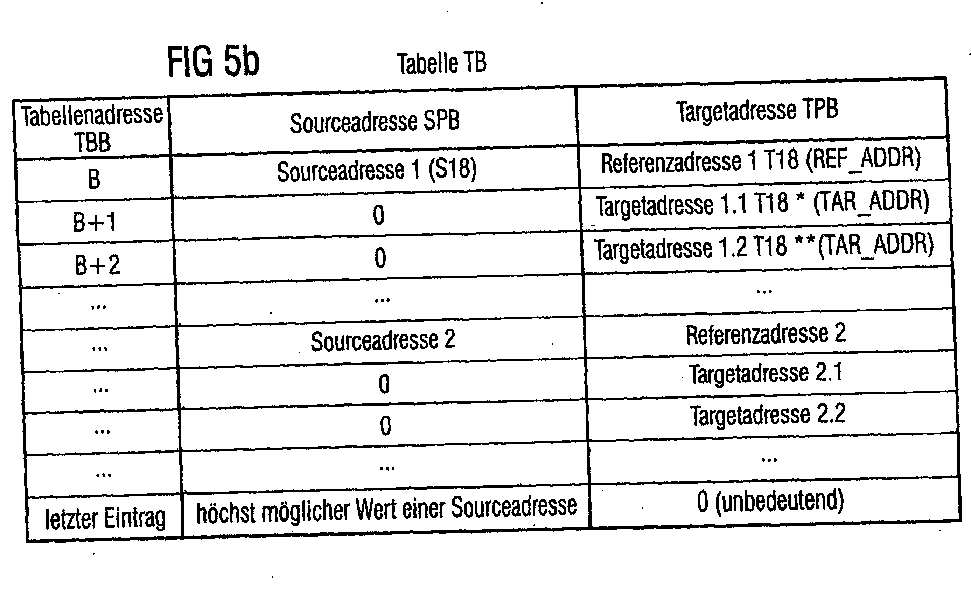

Bei schon weiter oben beschriebenen Mehrfachzuweisungen werden aber auch einer Sourcepixeladresse SP mehrere Targetpixeladressen TP zugeordnet. Für diese Mehrfachzuweisungen bzw. Mehrfachabbildungen wird eine weitere, in Figur 5b dargestellte Tabelle TB benutzt, die im Folgenden auch Referenztabelle TB genannt wird. Die Referenztabelle TB weist einer Sourcepixeladresse mehrere Targetpixeladressen zu, beispielsweise dem Sourcepixel S18 mehrere Targetpixel T18*und T18**.

Die Referenztabelle TB weist die drei Spalten "Tabellenadresse TBB", "Sourceadresse SPB" und "Targetadresse TPB" auf. In der ersten Spalte sind Tabellenadressen TBB enthalten, die auf entsprechende Sourceadressen SPB der zweiten Spalte und zugehörige Targetadressen TPB der dritten Spalte weisen. Eine Referenzadresse in der Spalte TPB, z.B. die Referenzadresse 1 des Targetpixels T18, bezeichnet eine Targetpixeladresse, die auch in der Rektifiziertabelle TA vorkommt. Einer Referenzadresse ist eine Sourceadresse, z.B. die Sourceadresse 1 der Spalte SPB, zugeordnet, die ebenfalls in der Rektifiziertabelle TA vorhanden ist. Eine Targetadresse in der Spalte TPB, beispielsweise die Targetadressen 1.1 und 1.2 der Targetpixel T18* und T18**, bezeichnet eine Targetpixeladresse, die durch Mehrfachzuweisungen einer Sourcepixeladresse auf mehrere Targetpixeladressen gebildet wird und die nicht in der Rektifiziertabelle vorkommt. Einer solchen Targetadresse ist in der Spalte SPB die Sourceadresse "0" zugewiesen. Somit wird im weiter unten beschriebenen Verfahren die Referenzadresse von der Targetadresse durch den jeweiligen zugewiesenen Wert der Sourceadresse SPB unterschieden.

So ist z.B. dem Pointer B eine Sourceadresse 1 und eine Referenzadresse 1 zugeordnet. Diese Sourceadresse 1 weist zu der auch in der Tabelle TA enthaltenen Referenzadresse 1 zusätzlich weitere Targetadressen 1.1, 1.2 auf, die in den folgenden Zeilen B+1, B+2 enthalten sind. Somit wird, wie unten noch detailliert erläutert wird, die Tabelle TB für die Zuweisung von einer Sourceadresse auf mehrere Targetadressen benutzt.

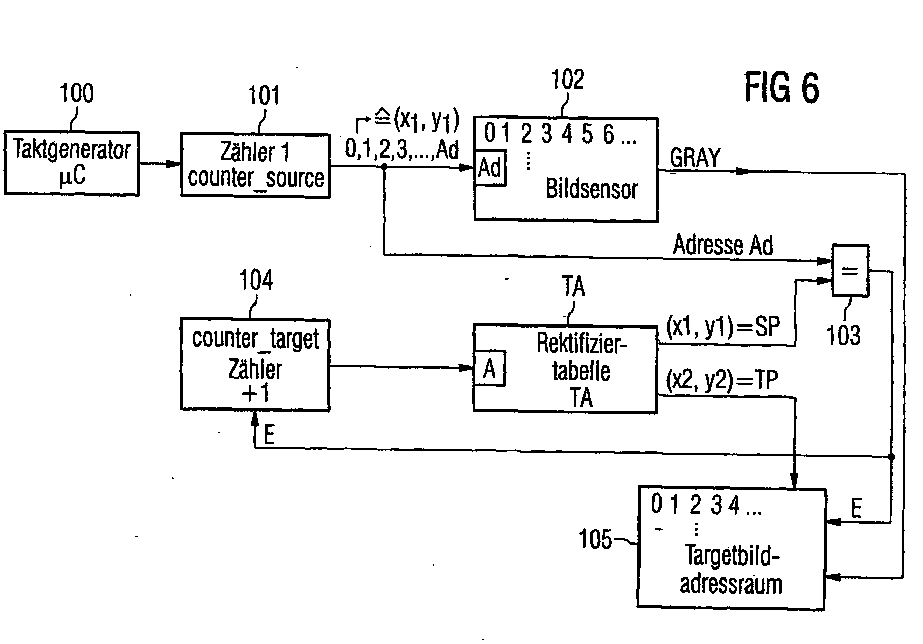

In Figur 6 ist anhand eines funktionellen Blockschaltbildes das Verfahren zur Entzerrung eines Sourcebildes S mit Hilfe einer tabellarischen Abbildungsvorschrift TA dargestellt. Dabei können die Funktionsblöcke sowohl in Software, in Hardware oder in einer Software-Hardware-Kombination ausgebildet sein. In Figur 6 wird eine Abbildungsvorschrift zum Entzerren eines Bildes dargestellt, bei der zur Vereinfachung der Darstellung nur Einfach-Zuweisungen vorgenommen werden, d.h. jedem ausgewählten Sourcepixel S aus der Referenztabelle TA wird genau ein Targetpixel T zugeordnet.

Ein Taktgenerator 100 taktet einen Zähler 101 mit dem Zählerinhalt "Counter_Source" sequentiell hoch. Der Ausgang des Zählers 101 ist mit dem Adresseingang Ad eines Bildsensors 72, 73 verbunden, der einen matrixförmig angeordneten Sourcepixeladressraum 102 aufweist. Der Zählerinhalt "Counter_Source" entspricht der Adresse Ad aus Figur 4. Am Ausgang des Bildsensors 72, 73 wird der Grauwert "GREY" der angewählten Adresse Ad des Bildsensors 72, 73 ausgegeben.

Die in der Figur 6 dargestellte Rektifiziertabelle TA ist bereits aus Figur 5a bekannt und wird von einem weiteren Zähler 104 mit dem Zählerinhalt "Counter_Target" beaufschlagt. Der weitere Zähler 104 weist auf den Pointer A der Tabellenadresse TBA. Am Ausgang der Tabelle steht jeweils die Sourcepixeladresse SP (X1;Y1) des betreffenden Sourcepixels und die Targetpixeladresse TP (X2;Y2) des betreffenden Targetpixels an. Ein Vergleicher 103 vergleicht die momentan am Bildsensor 72, 73 anliegende Adresse Ad mit der Sourcepixeladresse SP (X1; Y1). Entspricht die aktuelle Adresse Ad des Bildsensors 72, 73 der Sourcepixeladresse SP1 der Rektifizierungstabelle TA, so wird ein Enable-Signal E an den Targetspeicher 105 ausgegeben, der den Targetbildadressraum enthält. Beim Enablen des Targetspeichers 105 übernimmt dieser den Grauwert "GREY" des betreffenden Sourcepixels, der im Bildsensor unter der aktuellen Adresse AD anliegt und speichert diesen unter der Targetpixeladresse TP1, die er von der Rektifizierungstabelle TA erthält. Das Enable-Signal E zählt weiterhin für den nächsten Auslesevorgang den Zählerinhalt "Counter_Target" des Zählers 104 hoch, so dass an dem Eingang des Vergleichers 103 nun die nächste ausgewählte Sourcepixeladresse SP zum Vergleich mit der nächsten aktuellen Adresse Ad zur Verfügung steht.

Somit wird beispielsweise mit Hilfe des in Figur 6 dargestellten Funktionsschaltbildes und der in der Rektifizierungstabelle TA abgelegten Abbildungsvorschrift der Grauwert "GREY" eines Sourcepixels Si, der unter der Adresse Ad. (X1, Y1) gespeichert ist, unter der Targetbildadresse TP1 (X2, Y2) im Tagesspeicher 105 gespeichert. Durch Hochtakten des Zählers 101 wird der gesamte Sourcebildadressraum 102 des Bildsensors 72, 73. ausgelesen und die entsprechend ausgewählten Sourcepixel Si in den Targetbildadressraum des Targetspeichers 105 abgebildet. Der Grauwert "GREY" des ausgewählten Sourcepixels wird dabei unter der abgebildeten Targetadresse TP1 gespeichert.

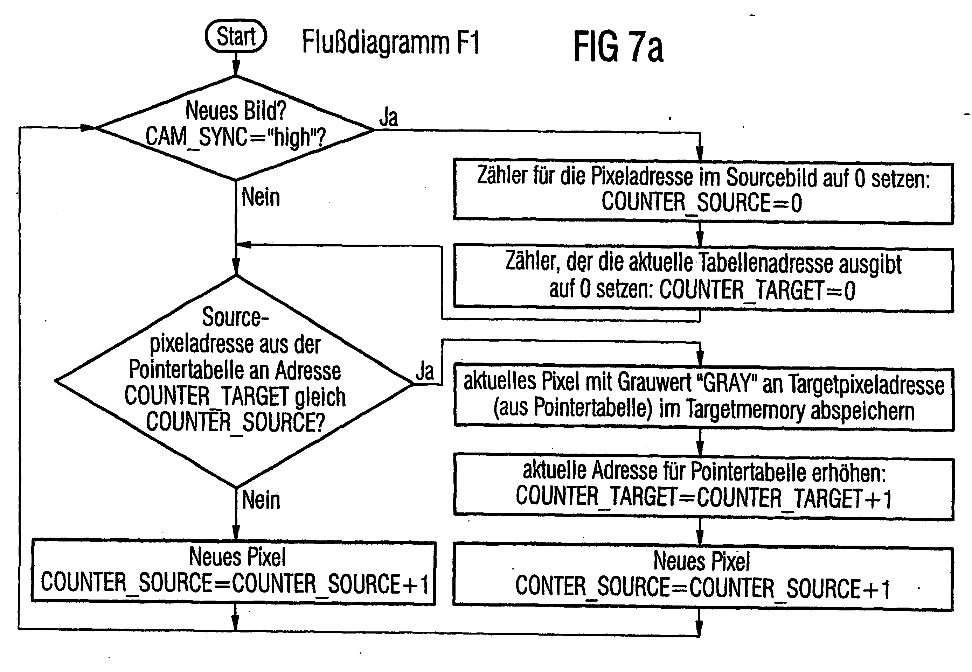

In Figur 7a ist ein Flussdiagramm F1 dargestellt, in dem das Verfahren zum Entzerren eines Sourcebildes S erläutert wird.

Beim Start des Verfahrens wird geprüft, ob ein neues Sourcebild S aus dem Bildspeicher 105 des Bildsensors 72, 73 ausgelesen werden soll (CAM_SYNC = high?). Wird ein neues Bild ausgelesen, so werden die Zähler 101 und 104 - aus Figur 6 bereits bekannt - auf 0 gesetzt (Counter_Source = 0; Counter_Target = 0). Damit wird die Adresse Ad im Bildsensor 72, 73 auf Null gesetzt, d. h. im Sourcebildadressraum 102 wird links oben mit dem Auslesen des Sourcebildes S begonnen. Der Zähler 104 (Counter_Target) weist durch das Zurücksetzen auf die Tabellenadresse A und somit auf das erste in der Rektifizierungstabelle TA vorhandene Adresspixelpaar SP, TP der Pixel S1, T1. Im folgenden Schritt wird über den Vergleicher 103 geprüft, ob die aktuelle Adresse Ad (Counter_Source) mit der in der Rektifizierungstabelle TA vorhandenen Sourcepixeladresse (Counter_Target) identisch ist. Fällt dieser Vergleich negativ aus, so ist der aktuellen Adresse Ad des Bildsensors 72, 73 keine Abbildanweisung von der Sourcepixeladresse zur Targetpixeladresse zugewiesen. Daher wird der Targetspeicher 105 nicht über das Enable-Signal aktiviert und der Zähler 104 (Counter_Target) nicht erhöht. Es wird nur der Zähler 101 mit dem Zählerinhalt "Counter_Source" zum Auslesen des nächsten Sourcepixels im Bildspeicher erhöht.

Ist die aktuelle Adresse Ad gleich der Sourcepixeladresse SP der Rektifizierungstabelle TA, so wird der aktuelle Grauwert "GREY" des Sourcepixels, z.B. S1, der unter der Bildadresse AD aufgenommen wurde, in den Targetspeicher 105 unter der Targetpixeladresse TP abgespeichert. Die dazu benötigte Targetpixeladresse TP wird aus der Rektifizierungstabelle TA zur Verfügung gestellt. Das Enable-Signal E des Vergleichers 103 und der Taktgenerator 100 sorgen für die zeitliche Synchronisation des Verfahrens, das vorzugsweise in einem Mikrocontroller, einem ASIC und/oder einem PPGA ausgeführt wird. Nach Abspeichern des Grauwerts S1 im Targetspeicher 105 wird der Zähler 104 (Counter_Target) um eins erhöht (A:=A+1). Dadurch wird der Pointer A der Rektifizierungstabelle auf die nächste ausgewählte Sourceadresse SP mit zugehöriger Targetadresse TP gesetzt. Weiterhin wird der Zähler 101 (Counter_Source) hoch gezählt, so dass der Grauwert des nächsten Sourcepixels S im Bildsensor 72, 73 ausgelesen werden kann. Nach Überprüfung, ob die letzte Adresse im Adressraum des Bildsensors erreicht ist, beginnt der Auslesezyklus eines neuen Sourcebildes. Nach dem Verfahren gemäß Figur 7a wird somit die in Figur 3 beispielhaft dargestellte Abbildungsvorschrift zum Entzerren eines Sourcebildes S durch Abbilden einzelner Sourcepixel Si in Targetpixel Ti für das gesamte Sourcebild S durchgeführt.

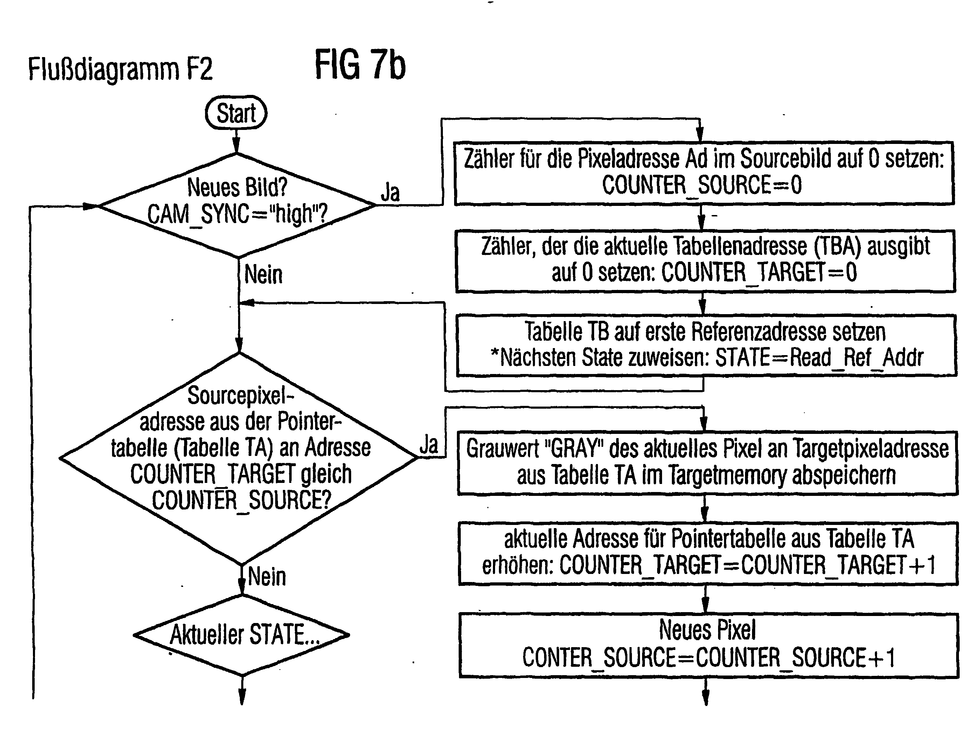

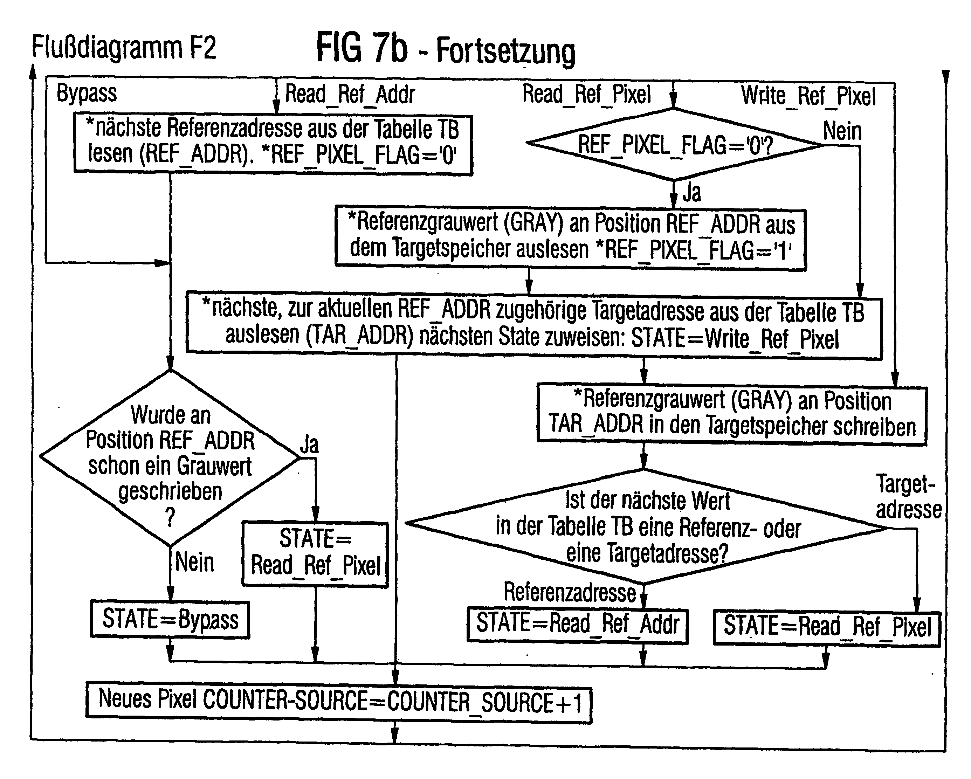

In Figur 7b ist ein weiteres Flussdiagramm F2 dargestellt, das im Vergleich zum Flussdiagramm F1 aus der Figur 7a auch eine Zuweisungen einer Sourcepixeladresse SP eines Sourcepixels zu mehreren Tärgetpixeladressen TP vornehmen kann. Dazu wird neben der Rektifiziertabelle TA aus Figur 5a eine weitere Referenztabelle TB aus Figur 5b benutzt, die die Mehrfachzuweisungen enthält. Vorzugsweise folgt die Referenztabelle TA direkt der Rektifiziertabelle TB im Festspeicher der Auswerteeinheit 74.

Das im Flussdiagramm F2 dargestellte Verfahren beginnt nach dem Start mit den dazugehörigen Initialisierungsroutinen. Es wird abgefragt, ob ein neues Sourcebild beginnt (CAM_SYNC="high"?). Soll damit begonnen werden, ein neues Sourcebild S aus dem Bildspeicher des Bildsensors 72, 73 auszulesen, so wird der Zähler (Counter_Source) für die Sourcepixeladresse im Sourcebild auf Null gesetzt. Der Zähler (Counter_Target), der auf die Tabellenadresse TBA in der Referenztabelle TA weist, wird auf Null gesetzt. Der Pointer B in der Tabellenadresse TBB der Tabelle TB wird auf die erste Sourceadresse beziehungsweise Referenzadresse gesetzt. Die erste Referenzadresse ist dabei die Targetpixeladresse, die der ersten Sourcepixeladresse mit Mehrfachzuweiseung zugeordnet ist, d. h. in Figur 5b die Sourceadresse 1. Weiterhin wird einer State-Machine ein Status bzw. ein State "Read_Ref_Addr" zugewiesen, der nachfolgend zum Lesen des nächsten Wertes B:=B+1 in der Referenztabelle TB führen soll.

Im nächsten Schritt wird die vom Zähler 104 eingestellte und von der Tabelle TA ausgegebene Sourcepixeladresse "Counter_Target" mit der aktuellen, vom anderen Zähler 101 eingestellten Sourcepixeladresse "Counter_Source" verglichen. Sind diese beiden Adressen identisch ("Counter_Source gleich Counter_Target"), so wird der Grauwert "GREY" des aktuellen ausgewählten Sourcepixels unter der Targetpixeladresse in den Targetspeicher abgespeichert. Bei Mehrfachzuweisungen entspricht diese Targetpixeladresse der Referenzadresse aus der Referenztabelle TB.

Die aktuelle Adresse für die Rektifizierungstabelle TA (Tabellenadresse A) wird um eins erhöht. Die Adresse Ad der Sourcepixeladresse des Bildsensors 72,73 wird um eins erhöht (Counter_Source), wodurch ein neues Sourcepixel im Bildsensor angesteuert wird. Daraufhin beginnt der Zyklus erneut mit der Prüfung, ob ein neues Bild vorhanden ist ("CAM_SYNC="high").

Ist bei dem vorherigen Vergleich ("Counter_Source gleich Counter_Target") die Sourcepixeladresse aus der Rektifiziertabelle TA ungleich der aktuellen Adresse Ad des Sourcepixels, so wird im folgenden Schritt der "State" der State-Machine geprüft.

In den nach der "State"-Zuweisung folgenden Verfahrensschritten wird mit Hilfe der Tabelle TB geprüft, ob eine Mehrfachzuweisung einer Sourcepixeladresse zu mehreren Targetpixeladressen vorhanden ist. Ist dies der Fall, wird in den folgenden Auslesezyklen der Grauwert "GREY" der betreffenden Targetpixeladresse, im Folgenden auch Referenzadresse "Ref_Addr" bezeichnet, ausgelesen und in die jeweiligen zusätzlichen Targetadressen 1.1, 1.2 kopiert (siehe Figur 5b). Dieser Kopiervorgang benötigt insgesamt drei Nein-Auslesezyklen, d.h. ein dreimaliges Durchlaufen der Schritte nach der "State"-Abfrage. Somit wird der Kopiervorgang in drei Teilschritte zerlegt. Diese Teilschritte werden durchgeführt in den Zeitabschnitten, in denen die aktuelle Sourcepixeladresse auf ein nicht-ausgewähltes weiteres Sourcepixel Nx, N1 (Figur 3) zeigt. Dieser Zeitraum beginnt nach dem Vergleich Counter_Target = Counter_Source mit der "State"-Abfrage.

Es gibt insgesamt vier Verzweigungen beim Überprüfen des "State":
"Bypass", "Read_Ref_Addr", "Read_Ref_Pixel" und "Write_Ref_Pixel".

Der aktuelle Wert des "State" bei Beginn eines neuen Bildes wurde auf "Read_Ref_Addr" gesetzt. Somit wird bei der "State"-Abfrage der Zweig "Read_Ref_Addr" ausgewählt, bei der in einem ersten Schritt die nächste Referenzadresse aus der Tabelle TB gelesen wird, wenn die aktuelle Sourcepixeladresse größer ist als die Sourcepixeladresse des Referenzpixels, die aus der Referenztabelle TB gelesen wird.

Nach dem Lesen der nächsten Referenzadresse Ref_Addr aus der Tabelle TB wird das "Ref_Pixel_Flag" zurückgesetzt. Das "Ref_Pixel_Flag" gibt im zurückgesetzten Zustand an, dass der Grauwert "GREY" an der Position der Referenzadresse "Ref_Addr" aus dem Targetspeicher ausgelesen werden kann.

Dieser Grauwert "GREY" wurde bei einer "Ja"-Entscheidung der vorherigen Abfrage "Coutner_target gleich Counter_Source" in den Targetspeicher abgelegt.

Im folgenden Schritt wird geprüft, ob überhaupt schon ein Grauwert "GREY" an die Position der Referenzadresse "Ref_Addr" im Targetspeicher geschrieben wurde. Wenn unter "Ref_Addr" ein Grauwert "GREY" geschrieben wurde, wird der "State" auf "Read_Ref_Pixel" gesetzt, sonst wird der "State" auf "Bypass" gesetzt. Der State "Bypass" tritt auf, wenn noch kein Grauwert an die Position der Referenzadresse Ref_Addr geschrieben wurde.

Dies wird festgestellt, indem die aktuelle Sourcepixeladresse Counter_Source mit der Sourcepixeladresse aus der Tabelle TB verglichen wird. Ist Counter_Source größer als der Tabelleneintrag, so wurde der Grauwert bereits in den Targetspeicher unter der Referenzadresse Ref_Addr geschrieben und kann kopiert werden, d.h der Grauwert wird im State "Read_Ref_Pixel" gelesen und im State "Write_Ref_Pixel" geschrieben. Ansonsten wird der State "Bypass" gesetzt, bei dem durch Überspringen des Lesens der nächsten Referenzadresse Ref_Addr gewartet wird, bis ein Grauwert unter der Referenzadresse Ref_pddr geschrieben wurde.

Nach der State-Zuweisung "Bypass" oder "Read_Ref_Pixel" wird der Pointer der aktuellen Sourcepixeladresse "Counter_Source" um eins erhöht, worauf hin zur Abfrage "Neues Bild" (CAM_SYNC="high") gesprungen wird.

Ist bei der nächsten State-Überprüfung "aktueller State ..." der State "Read_Ref_Pixel" zugewiesen, so wird mit Hilfe des Flags "Ref_Pixel_Flag" abgefragt, ob in dem vorherigen Zyklus der Referenzgrauwert "GREY" bereits an der Position der Referenzadresse "Ref_Addr" aus dem Targetspeicher ausgelesen wurde. Wurde der Referenzgrauwert "GREY" noch nicht aus dem Targetspeicher ausgelesen, so wird dies nun durchgeführt.

Nach dieser Flag-Abfrage wird die nächste, zur aktuellen Referenzadresse "Ref_Addr" zugehörige Targetadresse "Tar_Addr" ausgelesen, beispielsweise unter der Tabellenadresse B+1 die zur Referenzadresse 1 gehörige Targetadresse 1.1 aus der Tabelle TB, Figur 5b. Es wird nun ein nächster State "Write_Ref_Pixel" zugewiesen, der im nächsten Zyklus das Beschreiben dieser Targetadresse TAR_ADDR 1.1 in den Targetspeicher veranlasst. Nach der Zuweisung wird wieder über das Hochzählen der aktuellen Soürcepixeladresse Counter_Source zur Abfrage "Neues Bild?" (CAM_SYNC="high") gesprungen.

Wird in der nächsten State-Zuweisung zu dem State "Write_Ref_Pixel" verwiesen, so wird der in einem der vorherigen Zyklen ausgelesene Grauwert "GREY" der Referenzadresse an die Position der Targetadresse TAR_ADDR in den Targetspeicher geschrieben. Daraufhin wird geprüft, ob der nächste Wert in der Referenztabelle TB eine Referenzadresse oder eine Targetadresse ist. Dies wird durch das Auswerten der Sourceadresse in der Spalte SPB durchgeführt. Eine Referenzadresse ist einer Sourceadresse zugewiesen, während einer Targetadresse ein fester Wert, beispielsweise Null ("0") zugewiesen ist. Damit ist durch zeilenweises Hochzählen des Pointers B in der Tabellenadresse TBB feststellbar, ob eine Referenz-oder eine Targetadresse als nächster Wert in der Tabelle TB vorhanden ist.

Tritt als nächster Wert eine Targetadresse auf, so wird der State auf "Read_Ref_Pixel" gesetzt, so dass im nächsten Auslesezyklus die nächste zur aktuellen Referenzadresse Ref_Addr zugehörige Targetadresse Tar_Addr ausgelesen wird. Ist der nächste Wert in der Tabelle TB dagegen eine Referenzadresse, so wird der State "Read_Ref_Addr" gesetzt, wodurch im nächsten Zyklus die nächste Referenzadresse aus der Tabelle TB für die darauffolgende Mehrfachzuweisung gelesen wird. Nach dem Setzen des entsprechenden States wird der Pointer "Counter_Source", der auf die Sourcepixeladresse weist, um eins erhöht und auf die Abfrage "Neues Bild?" (CAM_SYNC="high"?) gesprungen.

Bevorzugt wird die Erfindung in Insassenschutzsystemen, Mobiltelefonen oder Webkameras eingesetzt.

In einer weiteren Ausführungsform ist ein gezieltes Verzerren (Morphen) von Bildern zur Erzeugung gewollter optischer Effekte, z. B. in Videokameras möglich.

## Patentansprüche

1. Verfahren zum Entzerren eines Bildes, insbesondere für Insassenschutzsysteme, bei dem
- mindestens ein vorgegebenes Sourcepixel (S1, S4) eines Sourcebildes (S) ausgewählt wird, dessen Grauwert (GREY) unter einer vorgegebenen Sourcepixeladresse (X1,Y1) auslesbar ist,
- das vorgegebene Sourcepixel (S1, S4) unter einer vorgegebenen Abbildungsvorschrift (S1->T1, S4->T4,
- S18->T18, S18->T18*) in mindestens ein Targetpixel (T1, T4) abgebildet wird, das unter einer vorgegebenen Targetpixeladresse (X2, Y2) in einem Target-Bild (T) angeordnet ist, und
- der unter der vorgegebenen Sourcepixeladresse (X1,Y1) ausgelesene Grauwert (GREY) unter der vorgegebenen Targetpixeladresse (X2,Y2) in einem Speicher (105) abgespeichert wird.
**dadurch gekennzeichnet, dass**
- mindestens ein ausgewähltes bzw. vorgegebenes Sourcepixel (S18) auf mehrere Targetpixel (T18, T18*) abgebildet wird, indem
- mit Hilfe mindestens einer Tabelle (TA,TB) aus der Sourcepixeladresse des ausgewählten Sourcepixels (S18) zumindest eine (T18) der mehreren Targetpixeladressen ((X1,Y2)(T18, T18*) der Targetpixel ermittelt wird,
- der Grauwert (GREY) der ausgewählten Sourcepixeladresse (S18) unter einer der mehreren Targetpixeladressen (T18, T18*) abgespeichert wird.
wobei
- während des Auslesens mindestens eines bzw. mehrerer, weiterer nicht-ausgewählter Sourcepixel (N1,Nx, Ni) der Grauwert (GREY) der ausgewählten Sourcepixeladresse (S18) unter der anderen bzw. den anderen der mehreren Targetpixeladressen (T18*) abgespeichert wird.

2. Verfahren nach Anspruch 1, **dadurch gekennzeichnet, dass** die Abbildungsvorschrift mit Hilfe mindestens einer Tabelle (TA,TB) ausgeführt wird, die in dem Speicher einer Auswerteeinheit (74) abgelegt ist.

3. Verfahren nach einem der vorherigen Ansprüche, **dadurch gekennzeichnet, dass**
- das Sourcebild (S) über eine Optik von einem optischen Sensor, vorzugsweise einem Bildsensor (73,72), erfasst wird.

4. Verfahren nach einem der vorherigen Ansprüche, **dadurch gekennzeichnet, dass**
- das vorgegebene Sourcepixel (S1, S18) direkt und/oder während des Auslesens des Sourcebildes (S) aus dem Bildsensor (72, 73) und/oder ohne Zwischenspeichern und/oder in Echtzeit in mindestens ein Targetpixel (T1, T4) abgebildet wird.

5. Verfahren nach einem der vorherigen Ansprüche, **dadurch gekennzeichnet, dass**
- das Sourcebild (S) vorgegebene bzw. ausgewählte Sourcepixel (S1 bis S18) aufweist, die in Targetpixel (T1 bis T18) abgebildet werden,
- die Sourcepixel (N1,..,S1 bis S18) eines Sourcebildes (S) zyklisch, vorzugsweise zeilenweise nacheinander, aus dem Sourcebild (S) ausgelesen werden,
- die vorgegebenen Sourcepixel synchron bzw. in einem festen zeitraster in die jeweiligen Targetpixel abgebildet werden.

6. Verfahren nach einem der vorherigen Ansprüche, **dadurch gekennzeichnet, dass**
- die Sourcepixel (N, S1 bis S18) jeweils unter ihrer Sourcepixeladresse (SP, (X1,Y1)) auslesbar sind,
- die Sourcepixeladressen einen Pixeladressraum bilden, in dem die Sourcepixeladressen matrixförmig (X1,Y1) geordnet sind, und
- die Sourcepixel zeilenweise mit ansteigender Adresszahl ausgelesen werden.

7. Verfahren nach einem der vorherigen Ansprüche, **dadurch gekennzeichnet, dass**
- das Sourcebild (S) weitere Sourcepixel (N1, Ni, Nx) aufweist, die nicht in Targetpixel (T1) abgebildet werden.

8. Verfahren nach einem der vorherigen Ansprüche, **dadurch gekennzeichnet, dass**
- die Sourcepixel (S1, S4) zum Abbilden auf mindestens ein Targetpixel (T1,T4) ausgewählt werden, deren Sourcepixeladressen (SP) in mindestens einer Tabelle (TA,TB) enthalten ist.

9. Verfahren nach einem der vorherigen Ansprüche, **dadurch gekennzeichnet, dass**
- in der mindestens einen Tabelle (TA,TB) die Sourcepixeladresse (X1, Y1, SP) eines ausgewählten Sourcepixels (S1 bis S18) und eine der Sourcepixeladresse (X1, Y1, SP) zugeordnete Targetpixeladresse (X2,Y2,TP) vorhanden ist,
- durch einen vorzugsweise synchron getakteten Source-Zähler (Counter_Source) eine Sourcepixeladresse angewählt und die zugehörigen Grauwerte ausgelesen werden,
- über einen Target-Zähler (Counter_Target) eine Tabellenadresse (TBA) der mindestens einen Tabelle (TA,TB) angewählt wird, wodurch eine ausgewählte Sourcepixeladresse (SP) und die dazugehörige Targetpixeladresse (TP) ausgegeben werden,
- die vom Source-Zähler angewählte Sourcepixeladresse (N1, .., S1, ..) mit der von der Tabelle (TA) ausgegebenen Sourcepixeladresse (S1) verglichen wird, wobei bei Gleichheit
- der Grauwert der Sourcepixeladresse (SP=S1, .., S18) unter der von der Tabelle ausgegebenen Targetpixeladresse (T1, .., T18) (TP) abgespeichert wird, und
- der Target-Zähler (Counter-Target) weitergezählt wird.

10. Verfahren nach einem der vorherigen Ansprüche, **dadurch gekennzeichnet, dass**
- das Sourcebild (S) einen Bildbereich (N1, Nx) aufweist; in dem weniger Sourcepixel (N1, Nx) ausgewählt werden als in einem weiteren Bildbereich (B, S1 bis S4) (S17, S15, S11, S12).

11. Verfahren nach einem der vorherigen Ansprüche, **dadurch gekennzeichnet, dass**
- das mindestens eine auf mehrere Targetpixel (T18, T18*) abgebildete Sourcepixel (S18) am Rand des Sourcebildes (S) angeordnet ist.

12. Verfahren nach einem der vorherigen Ansprüche, **dadurch gekennzeichnet, dass**
- eine Zeitspanne (Z) verfügbar ist, in dem mindestens ein weiteres Sourcepixel (N1, Ni, Nx) aus dem Sourcebild (S) ausgelesen wird, das nicht auf ein Targetpixel (T1 bis T18) abgebildet wird, wobei mehrere dieser Zeitspannen (Z) unmittelbar hintereinander oder voneinander getrennt angeordnet sein können, und während einer oder mehrerer Zeitspannen (Z)
- die jeweilige Targetpixeladresse (X2,Y2) der anderen Targetpixel/des anderen Targetpixels (T18*, T18**) mit Hilfe der mindestens einen Tabelle (TA) oder einer weiteren Tabelle (TB) ermittelt wird,
- der unter einer Targetpixeladresse (T18) abgespeicherte Grauwert ausgelesen wird und von der anderen/den anderen der mehreren Targetpixeladressen (T18*) abgespeichert wird.

13. Verfahren nach einem der vorherigen Ansprüche, **dadurch gekennzeichnet, dass**
- das Sourcebild (S) in einer Matrix (X1,Y1) angeordnete Sourcepixel (N1, S1) aufweist,
- der Adressraum der mindestens einen Tabelle (TA, TAB, A1,A2,...) im Wesentlichen die Größe des Adressraums des Targetbildes (T) aufweist,
- die Anzahl (n2 * m2) der Targetpixel (T1 bis T18) geringer ist als die Anzahl (n1 * m1) der Sourcepixel (N1, Nx, S1 bis S18), und
- die mindestens eine Tabelle Tabellenadressen (Pointer A, A+1, ...) aufweist, die jeweils auf eine Sourcepixeladresse und eine Targetpixeladresse weisen.

14. Verfahren nach einem der vorherigen Ansprüche, **dadurch gekennzeichnet, dass**
- die Grauwerte der Targetpixel (T1 bis T18) des Targetbildes(T) in einem Speicher (105) der Auswerteeinheit (74) gespeichert werden.

15. Verfahren nach einem der vorherigen Ansprüche, **dadurch gekennzeichnet, dass**
- die Grauwerte der Sourcepixel (S1 bis S18) an eine Auswerteeinheit (74) übermittelt werden, und
- die mindestens eine Tabelle (TA,TB) in einem Speicher der Auswerteeinheit (74) abgelegt ist.

16. Verfahren nach einem der vorherigen Ansprüche 3 bis 15, **dadurch gekennzeichnet, dass**
- der optische Sensor/der Bildsensor (73,72) Teil eines optischen Systems ist (71,72, 73), das Abstandsinformationen aufnimmt, vorzugsweise einer 3D-Stereokamera mit zwei Bildsensoren (72, 73) zur Stereobilderfassung oder Teil eines Laufzeitabhängigen Systems (71, 72) ist.

17. Verfahren nach einem der vorherigen Ansprüche, **dadurch gekennzeichnet, dass** das Verfahren in Mobiltelefonen und/oder Web-Kameras eingesetzt wird.

18. Vorrichtung zum Entzerren eines Bildes, insbesondere für Insassenschutzsysteme, **dadurch gekennzeichnet, dass** ein Kamerasystem (7) einen Bildbereich (Bi) im Innenraum eines Fahrzeugs (1) erfasst und die von dem Kamerasystem (7) erfassten Bildinformationen von einer Auswerteeinheit (74) nach einem der in den vorherigen Verfahrensansprüchen angegebenen Verfahrensschritten verarbeitet werden.

19. Vorrichtung nach Anspruch 18, **dadurch gekennzeichnet, dass**
- von dern Kamera system (7) erfasste Bildbereich (Bi) im Innenraum des Fahrzeugs (1) im Wesentlichen dem jeweiligen Sourcebild (S) des betreffenden Bildsensors (72, 73) entspricht.

20. Vorrichtung nach Anspruch 18 oder 19, **dadurch gekennzeichnet, dass**
der Öffnungswinkel des Kamerasystems (7) etwa 100x90 Grad beträgt.

## Claims

1. Method for correcting an image, particularly for occupant protection systems, **characterized in that**,
- at least one predefined source pixel (S1, S4) of a source image (S) is selected, the gray scale value (GREY) of which predefined source pixel can be read under a predefined source pixel address (X1, Y1),
- the predefined source pixel (S1, S4) is mapped, using a predefined imaging rule (S1->T1, S4->T4, S18->T18, S18->T18*), to at least one target pixel (T1, T4) arranged in a target image (T) under a predefined target pixel address (X2,Y2) and
- the gray scale value (GREY) read under the predefined source pixel address (X1,Y1) is stored in a memory (105) under the predefined target pixel address (X2,Y2).

2. Method according to Claim 1,
**characterized in that**
- the imaging rule is executed using at least one table (TA,TB) stored in the memory of an evaluation unit (74).

3. Method according to one of the preceding claims,
**characterized in that**
- the source image (S) is captured through an optical system of an optical sensor, preferably an image sensor (73, 72).

4. Method according to one of the preceding claims,
**characterized in that**
- the predefined source pixel (S1, S18) is mapped to at least one target pixel (T1, T4) directly and/or while the source image (S) is being read from the image sensor (72, 73) and/or without temporary storage and/or in real time.

5. Method according to one of the preceding claims,
**characterized in that**
- the source image (S) has predefined or selected source pixels (S1 to S18) that are mapped to target pixels (T1 to T18),
- the source pixels (N1,..,S1 to S18) of a source image (S) are read from the source image (S) cyclically, preferably row-by-row in succession,
- the predefined source pixels are mapped to the corresponding target pixels synchronously and/or in a fixed time sequence.

6. Method according to one of the preceding claims,
**characterized in that**
- each of the source pixels (N, S1 to S18) can be read under its source pixel address (SP,(X1,Y1)),
- the source pixel addresses constitute a pixel address space in which the source pixel addresses are arranged in the form of a matrix (X1,Y1), and
- the source pixels are read row-by-row moving in the direction from the lower address number to higher address number.

7. Method according to one of the preceding claims,
**characterized in that**
- the source image (S) has additional source pixels (N1, Ni, Nx) that are not mapped to target pixels (T1).

8. Method according to one of the preceding claims,
**characterized in that**
- the source pixels (S1 to S4), the source pixel addresses (SP) of which are contained in at least one table (TA,TB), are selected for mapping to at least one target pixel (T1,T4).

9. Method according to one of the preceding claims,
**characterized in that**
- the source pixel address (X1, Y1, SP) of a selected source pixel (S1 to S18) and a target pixel address (X2, Y2, TP) allocated to the source pixel address (X1, Y1, SP) are present in the at least one table (TA,TB)
- a source pixel address is selected using a preferably synchronously clocked source counter (Counter_Source) and the associated gray scale value is read,
- a table address (TBA) of the at least one table (TA,TB) is selected using a target counter (Counter_Target), as a result of which a selected source pixel address (SP) and the associated target pixel address (TP) are output,
- the source pixel address (N1, .., S1, ..) selected by the source counter is compared with the source pixel address (S1) output by the table (TA), it being the case that if the comparison finds the two addresses to be identical,
- the gray scale value of the source pixel address (SP=S1, .., S18) is stored under the target pixel address (T1, .., T18) (TP) output by the table and
- the target counter (Counter_Target) is incremented.

10. Method according to one of the preceding claims,
**characterized in that**
- the source image (S) has an image area (N1, Nx) in which fewer source pixels (N1, Nx) are selected than in another image area (B, S1 to S4) (S17, S15, S11, S12).

11. Method according to one of the preceding claims,
**characterized in that**
- at least one source pixel (S18) mapped to more than one target pixel (T18, T18*), is arranged at the edge of the source image (S).
- at least one selected or predefined source pixel (S18) is mapped to more than one target pixel (T18, T18*), it being the case that
- at least one (T18) of the multiple target pixel addresses ((X1, Y2)(T18, T18*) of the target pixel is determined from the source pixel address of the selected source pixel (S18) using at least one table (TA,TB),
- the gray scale value (GREY) of the selected source pixel address (S18) is stored under one of the multiple target pixel addresses (T18, T18*),
it being the case that
- the gray scale value (GREY) of the selected source pixel address (S18) is stored under the other or others of the multiple target pixel addresses (T18*) while at least one or more additional unselected source pixels (N1,Nx, Ni) are being read.

12. Method according to one of the preceding claims,
**characterized in that**
- a time interval (Z) is available in which at least one additional source pixel (N1, Ni, Nx) that is not mapped to a target pixel (T1 to T18) is read from the source image (S), it being possible for two or more of these time intervals (Z) to be arranged either with one immediately after the other or with each separated from the next, and
during one or more time intervals (Z)
- the corresponding target pixel address (X2,Y2) of the other target pixel or pixels (T18*, T18**) is determined using the at least one table (TA) or an additional table (TB),
- the gray scale value stored under a target pixel address (T18) is read and is stored by the other or others of the multiple target pixel addresses (T18*).

13. Method according to one of the preceding claims,
**characterized in that**
- the source image (S) has source pixels (N1, S1) arranged in a matrix (X1,Y1),
- the address space of the at least one table (TA, TAB, A1,A2,...) is essentially the same size as the address space of the target image (T),
- the number (n2 * m2) of target pixels (T1 to T18) is smaller than the number (n1 * m1) of source pixels (N1, Nx, S1 to S18), and
- the at least table has table addresses (pointers A, A+1, ...), each of which indicates a source pixel address and a target pixel address.

14. Method according to one of the preceding claims,
**characterized in that**
- the gray scale values of the target pixels (T1 to T18) of the target image (T) are stored in a memory (105) of the evaluation unit (74).

15. Method according to one of the preceding claims,
**characterized in that**
- the gray scale values of the source pixels (S1 to S18) are transmitted to an evaluation unit (74), and
- the at least one table (TA,TB) is stored in a memory of the evaluation unit (74).

16. Method according to one of the preceding Claims 3 to 15,
**characterized in that**
- the optical sensor/the image sensor (73, 72) is part of an optical system (71, 72, 73) that acquires range information, preferably of a 3D stereo camera having two image sensors (72, 73) for stereo image capture, or part of a propagation-time-dependent system (71, 72).

17. Method according to one of the preceding claims,
**characterized in that**
the method is used in mobile telephones and/or web cameras.

18. Device for correcting an image, particularly for occupant protection systems,
**characterized in that**
a camera system (7) captures an image area (Bi) in the interior of a vehicle (1) and the image information captured by the camera system (7) is processed by an evaluation unit (74) in accordance with one of the process steps specified in the preceding method claims.

19. Device according to Claim 18,
**characterized in that**
- the camera system (7) captures an image area (Bi) in the interior of the vehicle (1) that corresponds essentially to the corresponding source image (S) of the image sensor (72, 73) concerned.

20. Device according to Claim 18 or 19,
**characterized in that**
the aperture angle of the camera system (7) is approximately 100x90 degrees.

## Revendications

1. Procédé pour corriger une image, en particulier pour des systèmes de protection d'occupants d'une voiture, dans lequel
- on sélectionne au moins un pixel source (S1, S4) d'une image source (S) dont la valeur grise (GREY) est lisible sous une adresse de pixel source prédéterminée (X1, Y1),
- le pixel source (S1, S4) prédéterminé est imagé, suivant une instruction de présentation en image prédéterminée (S1->T1, S4->T4, S18->T18, S18->T18*), en au moins un pixel cible (T1, T4) qui est placé sous une adresse de pixel cible prédéterminée (X2, Y2) dans une image cible (T)+-, et
- la valeur grise (GREY) lue sous l'adresse de pixel source prédéterminée (X1, Y1) est stockée dans une mémoire (105) sous l'adresse de pixel cible prédéterminée (X2, Y2),
**caractérisé en ce que**
- au moins un pixel source sélectionné ou prédéterminé (S18) est imagé en plusieurs pixels cibles (T18, T18*),
- en déterminant au moins l'une (T18) des plusieurs adresses de pixels cibles (X1, Y2) (T18, T18*) des pixels cibles à l'aide d'au moins une table (TA, TB) à partir de l'adresse de pixel source du pixel source sélectionné (S18),
- la valeur grise (GREY) de l'adresse de pixel source sélectionnée (S18) est mémorisée sous l'une des plusieurs adresses de pixels cibles (T18, T18*),
moyennant quoi
- pendant la lecture d'au moins un ou plusieurs autres pixels sources non sélectionnés (N1, Nx, Ni), la valeur grise (GREY) de l'adresse de pixel source sélectionnée (S18) est mémorisée sous l'autre ou les autres des plusieurs adresses de pixels cibles (T18*).

2. Procédé selon la revendication 1, **caractérisé en ce que**
- l'instruction de présentation en image est exécutée à l'aide d'au moins une table (TA, TB) qui est déposée dans la mémoire d'une unité d'évaluation (74).

3. Procédé selon l'une quelconque des revendications précédentes, **caractérisé en ce que**
- l'image source (S) est détectée par un capteur optique, de préférence un capteur d'image (73, 72), par l'intermédiaire d'un objectif.

4. Procédé selon l'une quelconque des revendications précédentes, **caractérisé en ce que**
- le pixel source prédéterminé (S1, S18) est imagé directement et/ou pendant la lecture de l'image source (S) à partir du capteur d'image (72, 73) et/ou sans mémorisation intermédiaire et/ou en temps réel en au moins un pixel cible (T1, T4).

5. Procédé selon l'une quelconque des revendications précédentes, **caractérisé en ce que**
- l'image source (S) comprend des pixels sources prédéterminés ou sélectionnés (S1 à S18) qui sont imagés en pixels cibles (T1 à T18),
- les pixels sources (N1,..., S1 à S18) d'une image source (S) sont lus cycliquement, de préférence successivement ligne par ligne, à partir de l'image source (S),
- les pixels sources prédéterminés sont imagés en pixels cibles correspondants de manière synchronisée ou dans une trame temporelle fixe.

6. Procédé selon l'une quelconque des revendications précédentes, **caractérisé en ce que**
- les pixels sources (N, S1 à S18) sont lisibles sous leur adresse de pixel source (SP, (X1, Y1)),
- les adresses des pixels sources forment un espace d'adresses de pixels dans lequel les adresses des pixels sources sont classées en forme de matrice (X1, Y1), et
- les pixels sources sont lus ligne par ligne par ordre croissant des numéros de ligne.

7. Procédé selon l'une quelconque des revendications précédentes, **caractérisé en ce que**
- l'image source (S) comprend d'autres pixels sources (N1, Ni, Nx) qui ne sont pas imagés en pixels cibles (T1).

8. Procédé selon l'une quelconque des revendications précédentes, **caractérisé en ce que**
- les pixels sources (S1, S4) sont sélectionnés pour être imagés en au moins un pixel cible (T1, T4) dont l'adresse de pixel source (SP) est contenue dans au moins une table (TA, TB).

9. Procédé selon l'une quelconque des revendications précédentes, **caractérisé en ce que**
- l'adresse de pixel source (X1, Y1, SP) d'un pixel source sélectionné (S1 à S18) et une adresse de pixel cible (X2, Y2, TP) associée à l'adresse de pixel source (X1, Y1, SP) sont présentes dans la au moins une table (TA, TB),
- une adresse de pixel source est sélectionnée par un compteur source (Counter_Source), de préférence synchronisé, et les valeurs grises correspondantes sont lues,
- une adresse de table (TBA) de la au moins une table (TA, TB) est sélectionnée par l'intermédiaire d'un compteur cible (Counter_Target), de sorte qu'une adresse de pixel source sélectionnée (SP) et l'adresse de pixel cible correspondante (TP) sont sorties,
- l'adresse de pixel source sélectionnée par le compteur source (N1, ..., S1...) est comparée à l'adresse de pixel source sortie (S1) de la table (TA), moyennant quoi, en cas d'égalité
- la valeur grise de l'adresse de pixel source (SP=S1,... , S18) est mémorisée sous l'adresse de pixel cible sortie de la table (T1, ..., T18) (TP), et
- le compteur cible (Counter_Target) poursuit le comptage.

10. Procédé selon l'une quelconque des revendications précédentes,
**caractérisé en ce que**
- l'image source (S) comprend une zone d'image (N1, Nx) dans laquelle moins de pixels sources (N1, Nx) sont sélectionnés que dans une autre zone d'image (B, S1 à S4) (S17, S15, S11, S12).

11. Procédé selon l'une quelconque des revendications précédentes,
**caractérisé en ce que**
- le au moins un pixel source (S18) imagé en plusieurs pixels cibles (T18, T18*) est placé sur le bord de l'image source (S).

12. Procédé selon l'une quelconque des revendications précédentes,
**caractérisé en ce que**
- une tranche de temps (Z) est disponible, pendant laquelle au moins un autre pixel source (N1, Ni, Nx) est lu à partir de l'image source (S), qui n'est pas imagé en un pixel cible (T1 à T18), plusieurs de ces tranches de temps (Z) pouvant être placées directement les unes après les autres ou séparées les unes des autres, et
pendant une ou plusieurs tranches de temps (Z)
- l'adresse de pixel cible respective (X2, Y2) des autres pixels cibles/de l'autre pixel cible (T18*, T18**) est déterminée à l'aide de la au moins une table (TA) ou d'un autre table (TB),
- la valeur grise mémorisée sous une adresse de pixel cible (T18) est lue et mémorisée par l'autre/les autres des plusieurs adresses de pixels cibles (T18*).

13. Procédé selon l'une quelconque des revendications précédentes,
**caractérisé en ce que**
- l'image source (S) comprend des pixels sources (N1, S1) placés dans une matrice (X1, Y1),
- l'espace d'adresse de la au moins une table (TA, TAB, A1, A2, ...) présente au moins la taille de l'espace d'adresse de l'image cible (T),
- le nombre (n2 * m2) des pixels cibles (T1 à T18) est inférieur au nombre (n1 * m1) des pixels sources (N1, Nx, S1 à S18), et
- la au moins une table comprend des adresses de tables (Pointer A, A+1, ...) qui indiquent chacune une adresse de pixel source et une adresse de pixel cible.

14. Procédé selon l'une quelconque des revendications précédentes,
**caractérisé en ce que**
- les valeurs grises des pixels cibles (T1 à T18) de l'image cible (T) sont mémorisées dans une mémoire (105) de l'unité d'évaluation (74).

15. Procédé selon l'une quelconque des revendications précédentes,
**caractérisé en ce que**
- les valeurs grises des pixels sources (S1 à S18) sont transmises à une unité d'évaluation (74), et
la au moins une table (TA, TB) est déposée dans une mémoire de l'unité d'évaluation (74).

16. Procédé selon l'une quelconque des revendications précédentes 3 à 15,
**caractérisé en ce que**
- le capteur optique/le capteur d'image (73, 72) fait partie d'un système optique (71, 72, 73) qui enregistre des informations de pas, de préférence une caméra stéréo 3-D avec deux capteurs d'image (73, 72) pour la saisie d'image stéréo, ou fait partie d'un système dépendant du temps d'exécution (71, 72).

17. Procédé selon l'une quelconque des revendications précédentes, **caractérisé en ce que** le procédé est utilisé dans les téléphones portables et/ou les webcaméras.

18. Dispositif pour corriger une image, en particulier pour des systèmes de protection d'occupants d'une voiture, **caractérisé en ce qu'**un système de caméra (7) saisit une zone d'image (Bi) à l'intérieur d'un véhicule (1 ) et les informations saisies par le système de caméra (7) sont traitées par une unité d'évaluation (74) selon l'une des étapes de procédé indiquées dans les revendications de procédé précédentes.

19. Dispositif selon la revendication 18, **caractérisé en ce que**
- la zone d'image (Bi) saisie par le système de caméra (7) à l'intérieur du véhicule (1) correspond sensiblement à l'image source (S) du capteur d'image concerné (72, 73).

20. Dispositif selon la revendication 18 ou 19, **caractérisé en ce que** l'angle d'ouverture du système de caméra (7) est d'environ 100x90 degrés.
